Europäisches Patentamt

European Patent Office

Office européen des brevets

(11) Publication number: **0 081 628**
**B1**

(12) **EUROPEAN PATENT SPECIFICATION**

(45) Date of publication of patent specification: **05.11.86**

(51) Int. Cl.⁴: **B 65 B 35/52,** B 65 G 57/03

(21) Application number: **82107186.7**

(22) Date of filing: **09.08.82**

(54) **An apparatus for accumulating and stacking a plurality of articles.**

(30) Priority: **16.12.81 US 331252**

(43) Date of publication of application:
**22.06.83 Bulletin 83/25**

(45) Publication of the grant of the patent:
**05.11.86 Bulletin 86/45**

(84) Designated Contracting States:
**DE FR GB**

(56) References cited:
**AT-B- 206 368**
**GB-A-1 574 786**
**US-A-3 119 213**
**US-A-3 570 209**
**US-A-3 605 377**

(73) Proprietor: **Sabel, Herbert John**
**543 Avenue Del Oro**
**Sonoma California 95476 (US)**

(72) Inventor: **Sabel, Herbert John**
**543 Avenue Del Oro**
**Sonoma California 95476 (US)**

(74) Representative: **Howden, Christopher Andrew**
**et al**
**FORRESTER & BOEHMERT Widenmayerstrasse**
**4/I**
**D-8000 München 22 (DE)**

Courier Press, Leamington Spa, England.

## Description

This invention relates to an apparatus for accumulating and stacking a plurality of articles for subsequent loading into a shipping container.

One accepted procedure for loading a shipping container with a plurality of like articles or product elements, such as cans, cartons, or packages, is to accumulate and stack the articles before they are loaded into the container. A particularly efficient method for loading a standard corrugated shipping container comprises the insertion of a stack of accumulated articles through the open bottom of the container. An apparatus for carrying out such a bottom loading method is shown in U.S.—A—3,605,377.

In order to increase the production rate and efficiency of such loading apparatus, it is necessary to solve the problem of stacking and accumulating articles in a precise manner and at a high rate. Moreover, it is essential that the stacking operation be accomplished automatically and without damaging the articles. Usually, articles are supplied in a constantly moving stream or line from a conveyor belt and from this line the individual articles are manoeuvred and stacked into the desired accumulation. In a prior apparatus articles are first moved from a conveyor to an intermediate station and thereafter pushed onto a vertically movable loading platform. After each tier of articles is positioned on the loading platform, the platform is lowered to receive the next tier of articles. Such an arrangement is functional but relatively slow, which can be a serious disadvantage where a high output rate is required. Previous attempts to solve this problem have resulted in relatively complicated and impractical machines adaptable for use with only certain specialised products. Such a specialised apparatus for stacking bricks is described in U.S.—A—4,068,766. Whilst this Patent specification describes apparatus comprising, a plurality of tray means for cooperation with inclined conveyor means, each tray means having a flat surface for supporting articles, the tray means being arranged in consecutive order to present stepped surfaces, the arrangement described requires the use of a combination of separate transfer and return conveyors to achieve recycling of the mounting pallets and thus is complex to manufacture and to operate.

It is, therefore, a general object of the present invention to provide an improved apparatus for accumulating and stacking a plurality of articles for subsequent loading into a shipping container. It is a further object of the invention to provide an accumulating and stacking apparatus that will operate automatically at a relatively high cycling rate; and to provide a product stacking apparatus that is particularly suitable for operation with a bottom loading machine.

The invention provides an apparatus for accumulating and stacking a plurality of articles for subsequent loading into a container, said apparatus comprising a plurality of tray means (24) for cooperation with inclined conveyor means, each tray means having a flat surface for supporting articles, the tray means being arranged·in consecutive order to present stepped surfaces, characterised by chain means extending around drive sprocket means at one end and idler sprocket means at its other end, said idler sprocket means being at a higher elevation than said drive sprocket means so that said chain means is inclined at a predetermined angle; rotary power means for turning said drive sprocket means to move said chain means in one direction; means for connecting said tray means in consecutive order along said chain means, so that the flat surfaces are maintained horizontally and are stepped downwardly from said idler sprocket means to said drive sprocket means on the upper side of said chain means; the tray means being fixedly mountable on said chain means for endless passage about said sprocket means; inlet feed means adjacent at least one side of said chain means for receiving a line of articles to be stacked; means for accumulating a predetermined number of articles in an adjacent side by side order on said inlet feed means; pushing means for moving said accumulated articles from said inlet feed means onto a plurality of adjacent tray means including an uppermost tray that is empty and at least one adjacent tray that is partially loaded so that a substantially continuous flat surface of the same level is provided adjacent said conveyor means; means for activating said rotary power means to index said chain means a predetermined distance after said pushing means has completed the movement of articles onto said trays; and pull-out means for moving an accumulated stack of articles from a lowermost horizontal tray to an adjacent surface after said chain means have been indexed forwardly by said rotary power means.

In a preferred embodiment, a pair of endless spaced apart chains are supported by drive and idler sprockets. The drive sprockets are arranged at a lower level than the idler sprockets so that the chains are sloped at a predetermined angle. Supported between the chains is a plurality of trays for the stacked product, each tray being sized to support a full case load of accumulated product. The descending angle of the chains is such that the trays on the upper side of the chains are always arranged horizontally to form descending accumulation stations at levels that are spaced apart by a distance equal to the height of the product. Infeed conveyor belts are located on one or both sides of the accumulation stations for bringing in the articles to be stacked. A system of sensors and switches control the loading of the conveyor belts with a predetermined number of articles. Once loaded, a horizontally directed actuator moves articles from the conveyor belts onto the adjacent trays. Before starting the apparatus, the trays are preloaded so that there is a continuous flat surface adjacent the belt to receive the articles being transferred laterally from the infeed conveyors. After each lateral transfer of articles from the conveyors, the drive sprockets and, thus, the chains and trays, are indexed by the distance of one tray length, thereby creating another flat surface adjacent the conveyor belts as the fully loaded trays are advanced. At the lower end of the chains, each fully accumulated unit of articles is transferred laterally to a loading platform by another automatically controlled actuator. The loading platform may be the elevator of a bottom loading container packing apparatus. Thus, with the present invention, a continuous line or stream of articles can be automatically accumulated, stacked, and then loaded into a shipping container without interruption.

One embodiment of the invention will now be described, by way of example, and with reference to the accompanying drawings, in which:

FIGURE 1 is a fragmentary and partially schematic view in perspective of an article stacking and accumulating apparatus according to the present invention;

FIGURE 2 is a diagrammatic side elevation of the apparatus of Figure 1;

FIGURE 3 is a partially diagrammatic plan view of the apparatus of Figure 1 shown with articles accumulated for loading;

FIGURE 4 is a fragmentary view in side elevation showing in greater detail a chain support frame for the apparatus of Figure 1;

FIGURE 5 is an enlarged fragmentary sectional elevation, showing a portion of the apparatus of Figure 1;

FIGURE 6 is a fragmentary sectional side elevation showing one partially loaded tray;

FIGURE 7 is a fragmentary sectional view taken at line 7—7 of Figure 6;

FIGURE 8 is a fragmentary plan view of one tray for the apparatus of Figure 1; and

FIGURE 9 is a fragmentary elevation of the forward end of the apparatus of Figure 1.

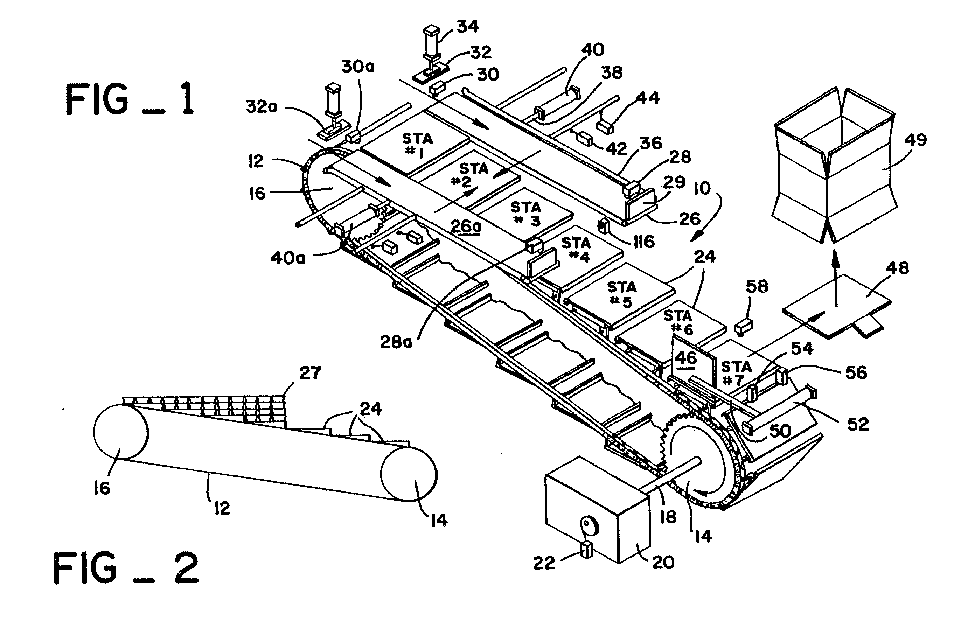

With reference to the drawings, Figure 1 shows, somewhat diagrammatically, an apparatus 10 for accumulating and stacking articles for loading into a container. In general, the apparatus 10 comprises a pair of endless chains or belts 12, each of which extends around a drive sprocket 14 at its front end and an idler sprocket 16 at its rear end. The drive sprockets 14 are spaced from the idler sprockets 16 and are at a lower elevation with respect thereto. The drive sprockets 14 of the two chains 12 are connected by a common shaft 18 to a rotary drive unit 20. The drive unit 20 includes a suitable electrical motor and a gear box (not shown) and is controlled by a cam actuated switch 22 which causes the drive 20 to operate intermittently to rotate the drive sprockets 14 and, thus, to index the chains 12, forwardly by a predetermined distance before stopping. Attached to and extending between the parallel and spaced apart chains 12 is a series of trays 24. Although the chains are arranged to slope downwardly towards their forward ends, the trays are so attached to the chains that they remain horizontal to form a series of downward steps towards the forward end of the apparatus, as shown in Figure 2.

Infeed means, such as conveyor belts 26, are located on one or both sides of the stepped trays 24 at the upper or rear ends of the chains 12. For example, each infeed means could be a flat plate coplanar with a conveyor belt at one end. Each input belt 26 receives a moving line of articles 27 to be stacked and positions a group of such articles in a line. As the articles are moved along the conveyor 26 they are pushed against a barrier plate 29 provided at the outer end of the conveyor. A first sensor 28, such as a photocell, is also located near the outer end of each belt 26 to detect the presence of articles against the barrier 29. A second photocell 30, equipped with a time delay, is located at the inlet end of each conveyor belt, to indicate when the conveyor belt is full. Signals from the photocells 28 and 30 control a feed stop 32 near the conveyor inlet. Each stop 32 may comprise a movable barrier member connected to the vertically oriented piston of an actuator 34.

Adjacent to the outer edge of each conveyor belt 26 is an article pushing fence 36 that is connected to the piston rod 38 of a linear actuator 40. The travel limits of each piston rod 38 and, thus of the fence 36, are controlled by a pair of spaced apart position switches 42 and 44.

A movable pushing fence 46 is also provided at the lower, forward, end of the apparatus, near to the drive sprockets 14. The pushing fence 46 acts to move an accumulated stack of articles from the lowermost horizontal tray 24 to another surface, e.g. an elevator 48, for ultimate loading into a shipping container or carton 49. The pushing fence 46 is connected by an arm 50 to a linear actuator 52, whose travel limits are controlled by a pair of position switches 54 and 56. The timing of the operation of the actuator 52 is controlled by a photocell 58 which provides a control signal whenever a fully loaded tray 24 moves into its lowermost position and is ready to be unloaded.

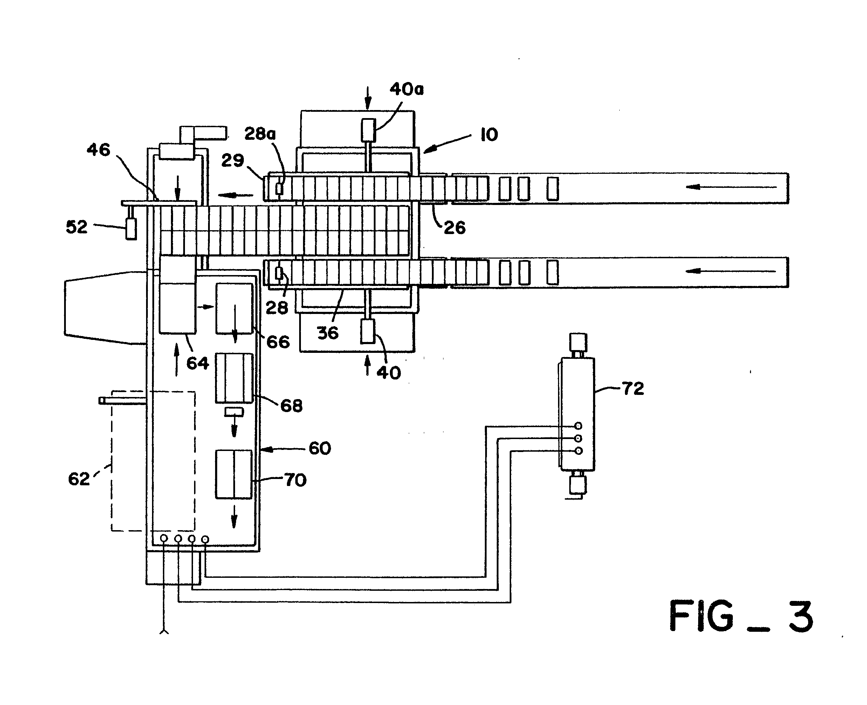

Figure 3 shows an accumulating apparatus 10 according to the invention in combination with a bottom loading carton machine 60. Such a machine, as is more fully described in U.S. Patent Specification No. 3,605,377, generally includes a folded carton magazine station 62, a bottom loading station 64 that receives a group of stacked articles, flap closing stations 66 and 68, and a sealing station 70, all of which are activated automatically by a suitable control system 72. Other forms of stacked article handling devices could, of course, also be used with the apparatus 10.

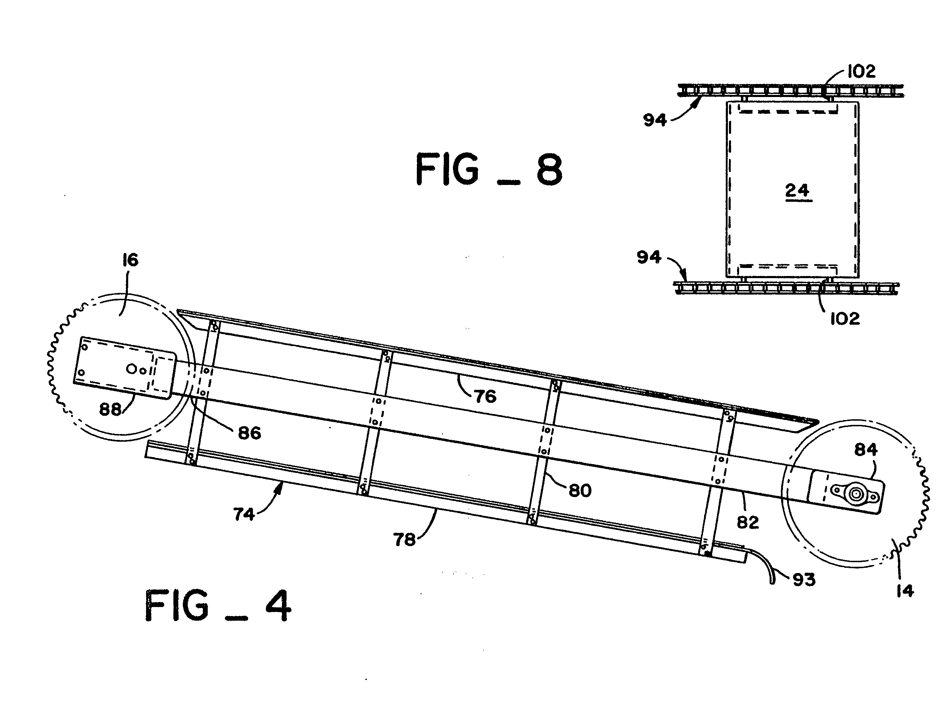

As shown in detail in Figure 4, the front and rear sprocket wheels 14 and 16 are mounted on a pair of frames 74. Each frame 74 comprises a pair of parallel and spaced apart upper and lower guide members 76 and 78, respectively, which are interconnected by a series of cross members 80. Attached to and extending forwardly from the forwardmost cross member 80 of each frame is a support member 82 for a suitable bearing 84 for the sprocket shaft 18. A similar support member 86, having a bearing 88 for the rear sprocket 16 extends rearwardly from another cross member 80.

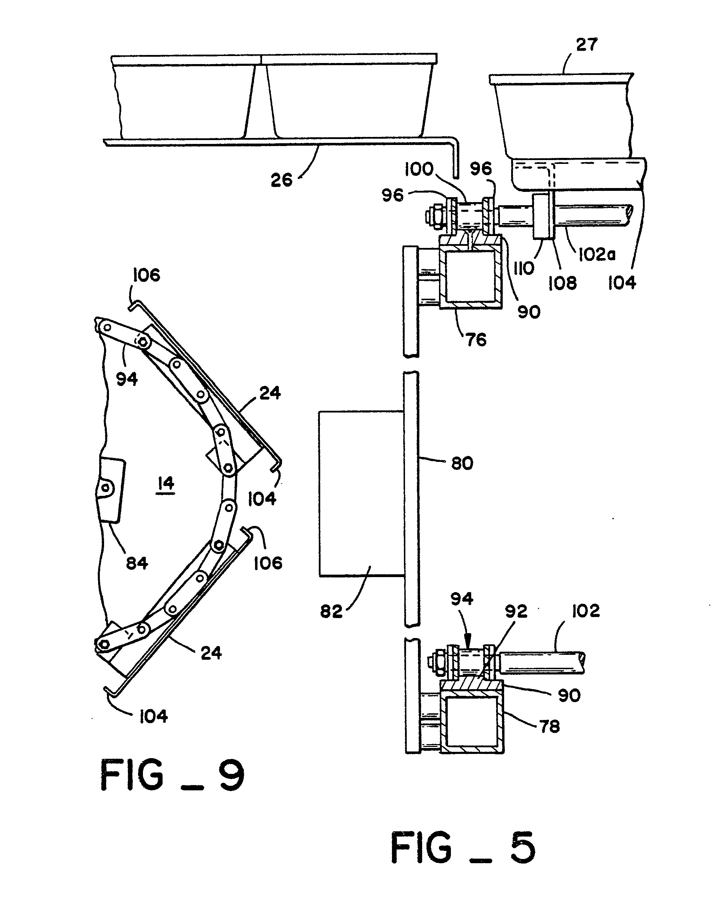

The guide members 76 and 78 on each frame are preferably metal and desirably have a cross section sufficient to provide adequate rigidity and strength. As shown in Figure 5, guide members having a square cross section may be used. A guide strip 90 is attached to the top surface of each of the guide members 76, 78, having a central ridge portion 92 adapted to fit between opposite walls of links of the chains 12 (as is described in greater detail below) thereby keeping the chains aligned. A curved deflector 93 is attached to the lower rail 78 to cause the chain 12 to move from the forward sprocket up onto the top of the lower guide member 78. Thus, the guide members always support the full weight of the chains and their trays, and, therefore, the chains will not sag during their return movement from the front sprockets to the rear sprockets.

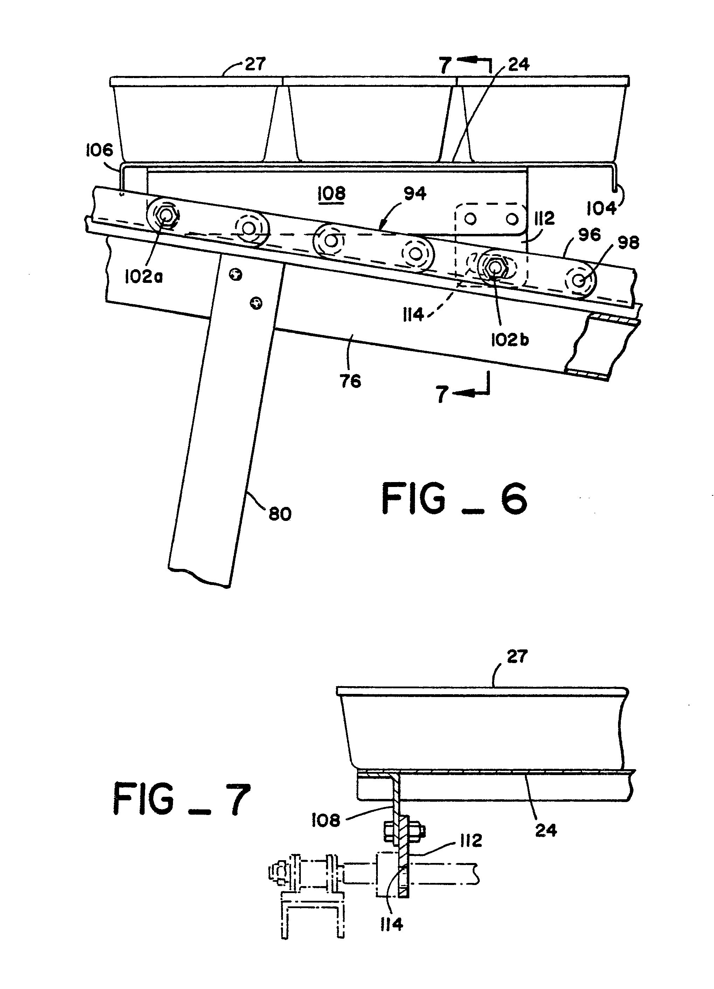

Each chain 12 comprises a plurality of links 94 formed by pairs of elongated, spaced-apart link plates 96 pivotally connected by cylindrical pins 98 extending through tubular spacers 100 between each pair of link plates. The plates of adjacent connecting links overlap and are retained by a single pin 98 in the conventional manner. At certain preselected spaced-apart locations on the chain, special elongated pins 102 are provided which extend from the link of one chain to a similar link of the other chain. As shown in Figure 6, each tray 24 is supported by a pair of such elongated pins 102a and 102b.

As shown in Figure 8, each tray 24 is rectangular, and may be formed of sheet metal having a uniform thickness sufficient to provide adequate strength and rigidity for supporting the stacked articles. Preferably, the front and rear leading edges have bent-down flanges 104 and 106 in order to increase the rigidity of the tray and to assure a smooth level surface for the articles being conveyed. Fixed to the underside of each tray, as shown in Figure 7, is a pair of right angle members 108 each having a vertical flange which extends parallel to the chains 12. Fixed to the rear ends of the aforesaid vertical flanges are bushings 110 through which one of the elongated pins (102a) extends to support the rear end of a tray 24. To the front end of the vertical flange of each right angle member 108 is fixed a tab member 112 that extends downwardly and forms a bearing hole 114 which receives the second one of said pair of elongated pins (102b). The bearing holes 114 are actually elongated slots which are provided in order to allow the pins 102b to move back and forth to enable each tray to be moved freely by the chains around the sprocket wheels, as illustrated in Figure 9. As is best seen in Figure 5 the two right angle members 108 for each tray are so spaced that they are positioned well inside of, and so do not interfere with the movement of, the chains 12.

The operation of a stacking and accumulation apparatus 10 according to the invention may be made completely automatic by using appropriately located limit switches, photocells, or other conventional position sensors, together with controllable actuators, such as air cylinders, plus a suitable clutch/brake mechanism on the sprocket drive 18.

Typical operation of the apparatus shown will now be described with particular reference to Figures 1 and 3. Before the apparatus is started, the tray 24 that is nearest the rear or input end of the apparatus, which is designated as station #1, is positioned to be level with the infeed conveyor 26. The next tray (station #2) is at a level that is lower by the same distance as the height of one article, and the third tray in line (station #3) is lower than station #1 by the distance of twice the height of one article. If the accumulated stack of articles is to be more than three, then a fourth tray (station #4) can be utilized at a level below the side conveyors that is three times the article height. Before the apparatus is started, the second and third trays (and fourth, if it is used) are preloaded with one and two layers of articles, respectively, so that first tray surface and the partially loaded second and third trays form a uniform unilevel surface adjacent the side conveyors.

The conveyors 26, 26a are then activated and articles 27 are fed onto them until the photocells 28, 28a detect that the line of articles has reached the backwall 29 at the end of each conveyor belt.

When the photocells 30, 30a at the inlet end of each conveyor belt 26, 26a, which is equipped with an internal time delay, senses that the conveyor belt is completely full of articles, it activates feed stops 32, 32a to stop the incoming flow of articles. At the same time, the infeed conveyor belts 26, 26a are stopped.

Since stations #2, #3, (and #4) have to be primed, as previously described, a photocell 116 is provided to detect that the primed articles are in place on the conveyor belts before further automatic operation can occur. If the stations are correctly primed the photocell 116 activates both left and right product push-over actuators 40 and 40a to stroke the product from the conveyor belts onto the descender trays 24.

The limit switches 42 and 44 indicate when the product push-over actuators 40, 40a have reached full stroke and have returned to their retracted positions. Indexing of the sprocket drive 18 can only be activated, to move the trays forwardly, if the photocell 58 indicates that the lowermost tray (station #7) is empty. Also, the position switch 54 must be closed to insure that the linear actuator 52 is out of the path of the trays. When signals from these latter elements are properly supplied, the rotary drive unit 20 operates to rotate the drive sprockets 14 to move the chains a predetermined distance, thereby effectively shifting the descender trays 24 down one station. The rotary drive unit 20 is stopped after each activation by the action of the cam actuated switch 22.

The aforesaid steps are repeated until a full pack of articles is delivered to the bottom loading station (#7), where the presence of a full pack is detected by the photocell 58. At this point, the linear actuator 52 operates to transfer the pack to the elevator 48 for loading into the container 49. The position switch 56 is used to indicate when the pack is positioned beneath an open container ready for loading. As the elevator 48 lifts up, the linear actuator 52 returns to the position switch 54. During the transfer operation, more product is accumulated, as previously described. Thus, the accumulating or stacking cycle repeats continuously, with indexing being followed by a pull-in operation and the accumulation of fresh products.

In providing for automatic operation of the apparatus 10, as described, the various sensors, switches and position indicators may all be connected in the conventional manner to a standard electrical logic control device such as a microprocessor chip or an integrated circuit device (not shown). Such devices are well known to those skilled in the art and are commercially available, together with complete instructions for connecting the sensors and for programming the necessary response signals. For example, the apparatus as shown, may be automatically controlled using a programmable controller such as (No. 5 T. I.) manufactured by Texas Instruments Incorporated.

In the described embodiment, the articles 27 being accumulated are shown as tub-like containers for products such as margarine. However, it should be apparent that the apparatus 10 of the present invention could be used for accumulating and stacking a wide variety of products in many different packaged or unpackaged articles including cartons, cans, bags, etc. Also, while the apparatus 10 is particularly useful in conjunction with a bottom loading container packaging apparatus, it could also be highly useful with other loading apparatus such as carton end loaders. In all applications, the present invention provides an efficient article stacking and accumulating device with a high cycling rate.

**Claims**

1. An apparatus for accumulating and stacking a plurality of articles for subsequent loading into a container, said apparatus comprising a plurality of tray means (24) for cooperation with inclined conveyor means, each tray means having a flat surface for supporting articles, the tray means being arranged in consecutive order to present stepped surfaces, characterised by chain means (12) extending around drive sprocket means (14) at one end and idler sprocket means (16) at its other end, said idler sprocket means being at a higher elevation than said drive sprocket means so that said chain means is inclined at a predetermined angle; rotary power means (20) for turning said drive sprocket means to move said chain means in one direction; means for connecting said tray means in consecutive order along said chain means, so that the flat surfaces are maintained horizontally and are stepped downwardly from said idler sprocket means to said drive sprocket means on the upper side of said chain means the tray means being fixedly mountable on said chain means for endless passage about said sprocket means; inlet feed means (26) adjacent at least one side of said chain means for receiving a line of articles to be stacked; means (29) for accumulating a predetermined number of articles in an adjacent side by side order on said inlet feed means; pushing means (36) for moving said accumulated articles from said inlet feed means onto a plurality of adjacent tray means including an uppermost tray that is empty and at least one adjacent tray that is partially loaded so that a substantially continuous flat surface of the same level is provided adjacent said conveyor means; means for activating said rotary power means to index said chain means a predetermined distance after said pushing means has completed the movement of articles onto said trays; and pull-out means (46) for moving an accumulated stack of articles from a lowermost horizontal tray to an adjacent surface after said chain means have been indexed forwardly by said rotary power means.

2. An apparatus according to claim 1, wherein said chain means (12) comprises a pair of spaced apart chains, each extending around a drive sprocket (14) at one end and an idler sprocket (16) at its other end.

3. An apparatus according to claim 2, wherein each said chain extends around a drive sprocket supported by a frame (74), said frame comprising upper and lower interconnected rails, and guide means (76) fixed to the upper side of each side rail for retaining and supporting said chain.

4. An apparatus according to any one of claims 1, 2 or 3, wherein said inlet feed means comprises two conveyor belts (26) on opposite sides of said chain means.

5. An apparatus according to any one of claims 1 to 4, wherein each said tray means (24) comprises a body of sheet material having a smooth, planar upper surface, spaced apart and parallel flanges on its under surface, rear bearing means aligned with holes near the rear ends of said flanges and front bearing means near the front ends of said flanges aligned with open slots that are spaced farther from said body than said aligned holes, rear pin means interconnecting said chain means and said rear bearing means and front pin means interconnecting said chain means and said slots of said front bearing means, whereby the upper surface of each said tray means will remain horizontal as it is moved downwardly along the upper side of said chain means and will move easily around said sprocket means.

6. An apparatus according to any one of claims 1 to 5, wherein said pushing means (36) comprises a movable rigid fence member extending parallel to said conveyor means, and linear actuator connected to said fence member.

7. An apparatus according to any one of claims 1 to 6 wherein said pull-out means (46) comprises a movable fence located near said drive sprocket means and a linear actuator connected to said movable fence member.

8. An apparatus according to any one of claims 1 to 7, wherein said means (29) for accumulating articles on said inlet feeds means comprises a barrier and a first article sensor (28) near the outlet end of said feed means, and a stop means (32) and a second article sensor (30) near the inlet end of said feed means, said stop means being operative in response to signals from said first and second sensors.

9. An apparatus according to claim 8, wherein said article sensor (30) includes means providing a time delay after receipt of a signal from said first article sensor.

10. An apparatus according to any one of the preceding claims, further including a third sensor means (58) for detecting an accumulated stack of articles on a lowermost tray, means for operating said pull-out means from its starting position to move said stack of articles laterally and means for operating said rotary power means after said pull-out means has returned to its starting position.

**Patentansprüche**

1. Gerät zur Ansammlung und Lagerung einer Mehrzahl von Gegenständen für ein nachfolgendes Laden in einen Container, welches Gerät eine Mehrzahl von Tragelementen (24) aufweist, für eine Zusammenwirkung mit geneigten Transportmitteln, welche Tragelemente eine flache Oberfläche haben, zur Lagerung der Gegenstände, welche Tragelemente weiter in einer aufeinanderfolgenden Ordnung angeordnet sind, so, daß sich gestufte Flächen ergeben, dadurch gekennzeichnet, daß Kettenelemente (12) vorgesehen sind, die sich um Antriebskettenräderelemente (14) an einem Ende herum erstrecken und um Leerlaufkettenradelemente (16) an ihrem anderen Ende, welche Leerlaufkettenradelemente auf einem höheren Niveau sich befinden als die Antriebsradkettenelemente, so daß die Kettenelemente um einen vorbestimmten Winkel geneigt sind; weiter durch drehende Antriebselemente (20), zum Drehen der Antriebskettenräder, um die Kettenelemente in einer Richtung zu bewegen; durch Mittel zur Verbindung der Tragelemente in aufeinanderfolgender Ordnung entlang der Kettenelemente, so daß die flachen Flächen horizontal gehalten sind und nach unten gestuft sind, von den Leerlaufkettenradelementen zu den Antriebskettenradelementen an der oberen Seite der Kettenelemente, wobei die Tragelemente fest an den Kettenelementen angebracht sind, für einen endlosen Weg um die Kettenradelemente; durch Einlaßzuführmittel (26), angrenzend an zumindest eine Seite der Kettenelemente, zur Aufnahme einer zu stapelnden Reihe von Gegenständen; durch Elemente (29) zur Anhäufung einer vorbestimmten Anzahl von Gegenständen auf einer angrenzenden Seite durch seitliche Anordnung an den Einlaßzuführelementen; durch Druckelemente (36) zur Bewegung der angehäuften Gegenstände von den Einlaßzuführelementen auf eine Mehrzahl von angrenzenden Tragelementen, einschließlich eines obersten Tragelementes, das leer ist und zumindest ein angrenzendes Tragelement, das teilweise beladen ist, so daß eine im wesentlichen durchgehende flache Fläche des gleichen Niveaus sich ergibt, angrenzend an die Tragmittel; durch Elemente zur Betätigung der drehenden Antriebselemente, um die Kettenelemente auf einen vorbestimmten Abstand einzustellen, nachdem die Druckelemente die Bewegung der Gegenstände auf den Tragelementen abgeschlossen haben; und durch Herausziehelemente (46) zur Bewegung der angehäuften gelagerten Gegenstände von einem untersten horizontalen Tragelement auf eine angrenzende Oberfläche, nachdem die Kettenelemente eingestellt worden sind durch die drehenden Antriebselemente.

2. Gerät nach Anspruch 1, wobei die Kettenelemente (12) ein Paar von einander beabstandeten Ketten aufweisen, die sich jeweils um ein Antriebskettenrad (14) an einem Ende und ein Leerlaufkettenrad (16) an ihrem anderen Ende herumerstrecken.

3. Gerät nach Anspruch 2, wobei jede Kette sich um ein Antriebskettenrad und ein Leerlaufkettenrad, abgestützt durch einen Rahmen (74), herumerstreckt, wobei der Rahmen obere und untere miteinander verbundene Schienen aufweist, und Führungselemente (76), die an der oberen Seite jeder der Schienen befestigt sind, für eine Zurückhaltung und Abstützung der Kette.

4. Gerät nach einem der Ansprüche 1, 2 oder 3, wobei die Einlaßzuführelemente zwei Transportgurte (26) an gegenüberliegenden Seiten der Kettenelemente aufweisen.

5. Gerät nach einem der Ansprüche 1 bis 4, wobei jedes der Tragelemente (24) einen Körper aus blechartigem Material aufweist, der eine glatte, ebene Oberfläche besitzt, beabstandete und parallele Flanschen an seiner unteren Seite, rückwärtige Lagerungselemente, die mit Ausnehmungen nahe den rückwärtigen Enden der Flansche ausgerichtet sind und vordere Lagerungselemente nahe den vorderen Enden der Flansche, die mit offenen Schlitzen, die weiter von dem Körper beabstandet sind als die ausgerichteten Ausnehmungen, ausgerichtet sind, weiter mit rückwärtigen Zapfenelementen, die die Kettenelemente und die rückwärtigen Lagerelemente verbinden, und mit vorderen Zapfenelementen, die die Kettenelemente und die Schlitze der vorderen Lagerungselemente verbinden, wobei die obere Oberfläche jedes Tragelementes horizontal bleibt, wenn sie nach unten bewegt wird, entlang der oberen Seite der Kettenelemente und sich leicht um die Kettenradelemente herum bewegt.

6. Gerät nach einem der Ansprüche 1 bis 5, wobei die Druckelemente (36) ein bewegbares, starres Zaunelement aufweisen, das sich parallel zu den Transportelementen erstreckt, und einen linearen Betätiger, der mit dem Zaunelement verbunden ist.

7. Gerät nach einem der Ansprüche 1 bis 6, wobei die Ausziehelemente (46) einen bewegbaren Zaun aufweisen, der nahe den Antriebskettenradelementen angeordnet ist, und einen linearen Betätiger, der mit dem bewegbaren Zaunelement verbunden ist.

8. Gerät nach einem der Ansprüche 1 bis 7, wobei die Elemente (29) zur Anhäufung der Gegenstände auf den Einlaßzuführelementen eine Schranke und einen ersten Gegenstanderfasser (28) aufweisen, nahe dem Auslaßende der Zuführelemente, und ein Stopelement (32) und einen zweiten Gegenstandserfasser (30) nahe dem Einlaßende der Zuführelemente, wobei das Stopelement tätig wird in Reaktion auf Signale von den ersten und zweiten Gegenstandserfassern.

9. Gerät nach Anspruch 8, wobei der zweite Gegenstandserfasser (30) Elemente aufweist, die eine Zeitverzögerung ergeben, nach Erfassung eines Signales von dem ersten Gegenstandserfasser.

10. Gerät nach einem der vorstehenden Ansprüche, weiter aufweisend einen dritten Gegenstandserfasser (58), zur Erfassung einer angehäuften Lagermenge von Gegenständen auf einem untersten Tragelement, Elemente zur Betätigung der Herausziehelemente von der Startstellung, um die gelagerten gegenstände seitlich zu bewegen, und Elemente zur Betätigung der drehbaren Antriebselemente, nachdem die Herausziehelemente in ihre Startstellung zurückgekehrt sind.

## Revendications

1. Appareil pour accumuler et empiler une multiplicité d'articles en vue d'un chargement ultérieur dans un récipient, ledit appareil comprenant une multiplicité de moyens formant plateau (24) destinés à coopérer avec un moyen formant convoyeur incliné, chaque plateau comportant une surface plate destinée à supporter des articles, les plateaux étant disposés dans un ordre successif de manière à présenter des surfaces échelonnées en gradins, caractérisé par un moyen formant chaîne (12) s'étendant autour d'un moyen formant roue à chaîne d'entraînement (14) à une de ses extrémités et autour d'un moyen formant roue à chaîne folle (16) à son autre extrémité, ladite roue à chaîne folle se trouvant à une hauteur plus grande que celle de la roue à chaîne d'entraînement, de sorte que ledit moyen formant chaîne est incliné suivant un angle prédéterminé; un moyen d'entraînement en rotation (20) pour faire tourner ladite roue à chaîne d'entraînement de manière à déplacer ledit moyen formant chaîne dans un seul sens; un moyen pour relier lesdits plateaux dans un ordre successif le long dudit moyen formant chaîne, de manière que les surfaces plates soient maintenues horizontalement et soient échelonnées en gradins vers le bas depuis ladite roue à chaîne folle jusqu'à ladite roue à chaîne d'entraînement sur le côté supérieur dudit moyen formant chaîne, les plateaux étant montés de façon fixe sur ledit moyen formant chaîne en vue d'un passage continu autour de ladite roue à chaîne; un moyen d'alimentation (26) adjacent à au moins un des côtés dudit moyen formant chaîne en vue de recevoir une succession d'articles à empiler; un moyen (29) pour accumuler un nombre prédéterminé d'articles dans un ordre juxtaposé adjacent sur ledit moyen d'alimentation; un moyen de poussée (36) pour transférer lesdits articles accumulés dudit moyen d'alimentation jusqu'à une pluralité de plateaux adjacents comprenant un plateau supérieur extrême qui est vide et au moins un plateau adjacent qui est partiellement chargé de manière qu'une surface plate sensiblement continue et de même niveau soit formée en un point adjacent audit convoyeur; un moyen pour mettre en fonction ledit moyen d'entraînement en rotation de manière à indexer ledit moyen formant chaîne sur une distance prédéterminée après que ledit moyen de poussée a achevé le transfert des articles sur lesdits plateaux; et un moyen d'extraction (46) pour déplacer une pile accumulée d'articles d'un plateau horizontal inférieur extrême jusqu'à une surface adjacente après que ledit moyen formant chaîne a été indexé vers l'avant par ledit moyen d'entraînement en rotation.

2. Appareil selon la revendication 1, dans lequel ledit moyen formant chaîne (12) comprend une paire de chaînes espacées l'une de l'autre, chaque chaîne s'étendant autour d'une roue à chaîne d'entraînement (14) à une de ses extrémités et d'une roue à chaîne folle (16) à son autre extrémité.

3. Appareil selon la revendication 2, dans lequel chaque chaîne précitée s'étend autour d'une roue à chaîne d'entraînement et d'une roue à chaîne folle supportée par un bâti (74), ledit bâti comprenant des rails supérieur et inférieur reliés mutuellement, et un moyen de guidage (76) fixé sur le côté supérieur de chaque rail précité pour retenir et supporter ladite chaîne.

4. Appareil selon l'une quelconque des revendications 1, 2 ou 3, dans lequel ledit moyen d'alimentation comprend deux courroies (26) de convoyeur sur les côtés opposés dudit moyen formant chaîne.

5. Appareil selon l'une quelconque des revendications 1 à 4, dans lequel chaque plateau (24) comprend un corps d'un matériau en feuille comportant une surface supérieure plane et lisse, des rebords parallèles espacés sur sa surface inférieure, un moyen formant palier arrière aligné avec des trous ménagés près des extrémités supérieures desdits rebords et un moyen formant palier avant disposé près des extrémités avant desdits rebords et aligné avec des fentes ouvertes qui sont espacées davantage dudit corps que lesdits trous alignés, un moyen formant axe arrière reliant mutuellement ledit moyen formant chaîne et ledit moyen formant palier arrière et un moyen formant axe avant reliant mutuellement ledit moyen formant chaîne et ledit fentes dudit moyen formant palier avant, grâce à quoi la surface supérieure de chaque plateau précité reste horizontale lorsqu'elle est déplacée vers le bas le long du côté supérieur dudit moyen formant chaîne et se déplace facilement autour desdites roues à chaîne.

6. Appareil selon l'une quelconque des revendications 1 à 5, dans lequel ledit moyen de poussée (36) comprend une barrière rigide mobile s'étendant parallèlement audit convoyeur et un actionneur linéaire relié à ladite barrière.

7. Appareil selon l'une quelconque des revendications 1 à 6, dans lequel ledit moyen d'extraction (46) comprend une barrière mobile placée près de ladite roue d'entraînement et un actionneur linéaire relié à ladite barrière mobile.

8. Appareil selon l'une quelconque des revendications 1 à 7, dans lequel ledit moyen (29) destiné à accumuler des articles sur ledit moyen d'alimentation comprend une plaque d'arrêt et un premier détecteur (28) d'articles près de l'extrémité de sortie dudit moyen d'alimentation, et un moyen formant butée (32) ainsi qu'un second détecteur (30) d'articles près de l'extrémité d'entrée dudit moyen d'alimentation, ledit moyen formant butée pouvant être actionné en réponse à des signaux provenant desdits premier et second détecteurs.

9. Appareil selon la revendication 8, dans lequel ledit second détecteur (30) d'articles comprend un moyen assurant une temporisation après la réception d'un signal en provenance dudit premier détecteur d'articles.

10. Appareil selon l'une quelconque des revendications précédentes, comprenant en outre un troisième moyen (58) de détection pour détecter une pile accumulée d'articles sur un plateau inférieur extrême, un moyen pour actionner ledit moyen d'extraction à partir de sa position de départ pour déplacer ladite pile d'articles latéralement et un moyen pour actionner ledit moyen d'entraînement en rotation après le retour dudit moyen d'extraction dans sa position de départ.

FIG _ 1

FIG _ 2

0 081 628

FIG - 3

FIG _ 8

FIG _ 4

FIG _ 9

FIG _ 5

0 081 628

FIG _ 6

FIG _ 7

5